# EUROPÄISCHE PATENTSCHRIFT

(11) **EP 1 017 861 B1**
(45) Veröffentlichungstag und Bekanntmachung des Hinweises auf die Patenterteilung: **31.10.2001**
(21) Anmeldenummer: 98952525.8
(22) Anmeldetag: 28.08.1998
(51) Int. Cl.: C21D 6/00, H01M 8/02

(54) **VERFAHREN ZUR HERABSETZUNG KORROSIONSBEDINGTER OXIDWIDERSTÄNDE AUF CHROMSTAHL-BAUTEILEN**
METHOD FOR REDUCING THE RESISTIVITY OF THE CORROSION-INDUCED OXIDE LAYER
PROCEDE DE REDUCTION DE LA RESISTIVITE INHERENTE A LA COUCHE D'OXYDE DUE A LA CORROSION

(30) Priorität: 03.09.1997 DE 19738405
(43) Veröffentlichungstag der Anmeldung: 12.07.2000
(73) Patentinhaber: MTU Motoren- und Turbinen-Union Friedrichshafen GmbH, 88045 Friedrichshafen (DE)
(72) Erfinder: WIND, Jörg, D-88090 Immenstaad (DE); NITSCHKE, Felix, D-81371 München (DE)
(74) Vertreter: Winter, Josef
(86) Internationale Anmeldenummer: DE9802538
(87) Internationale Veröffentlichungsnummer: WO9911828

(56) Entgegenhaltungen:
- EP-A- 0 353 699
- DE-A- 3 126 706
- US-A- 5 565 167
- PATENT ABSTRACTS OF JAPAN vol. 097, no. 010, 31. Oktober 1997 & JP 09 157801 A (HITACHI METALS LTD), 17. Juni 1997
- PATENT ABSTRACTS OF JAPAN vol. 097, no. 003, 31. März 1997 & JP 08 311620 A (NISSHIN STEEL CO LTD), 26. November 1996
- PATENT ABSTRACTS OF JAPAN vol. 097, no. 001, 31. Januar 1997 & JP 08 225892 A (SUMITOMO METAL IND LTD), 3. September 1996
- PATENT ABSTRACTS OF JAPAN vol. 017, no. 067 (C-1025), 10. Februar 1993 & JP 04 272132 A (NIPPON STAINLESS STEEL CO LTD;OTHERS: 01), 28. September 1992

## Beschreibung

Die Erfindung bezieht sich auf die Verwendung eines Chromstahl-Bauteils als Kathodenstromkollektor für eine Schmelzkarbonatbrennstoffzelle.

In vielen technischen Anlagen wird aus Gründen der Festigkeit und Korrosionsbeständigkeit Chromstahl für die verschiedensten Bauteile benutzt. Dieses Material widersteht dem Korrosionsangriff durch Ausbildung einer schützenden Chromoxidschicht. Die Chromoxidschicht stellt eine gute Barriere gegen Diffusion dar und verhindert somit einen Korrosionsangriff. Insbesondere bei Hochtemperaturanwendungen führt die Chromoxidschicht zu einer starken Verminderung des Oxidwachstums und so zu einem dauerhaften Schutz vor Zerstörung des Werkstoffs.

Aus der EP 0 353 699 A1 geht ein Verfahren zur Wärmebehandlung eines Chromstahl-Bauteils als bekannt hervor, wobei das Bauteil bei mindestens 950°C in einer sauerstofffreien Atmosphäre geglüht wird. Dieses Vorgehen dient dazu, eine Anreicherung von Chromoxid in der Oberfläche und damit die Bildung extrem harter Oberflächenschichten zu vermeiden, um eine Bearbeitung des Chromstahl-Bauteils mit üblichen Mitteln zu ermöglichen.

Wird Chromstahl jedoch für stromführende Bauteile in Hochtemperaturanwendungen in oxidierender Atmosphäre verwendet, so führt die zwangsläufige Bildung der Chromoxidschicht zu einem durch diese Schicht verursachten elektrischen Widerstand, der seinerseits zu Spannungsverlusten und damit zu einer Herabsetzung des Wirkungsgrades der jeweiligen Anlage führt.

Ein Beispiel für ein Bauteil, das einer oxidierenden Atmosphäre bei hohen Temperaturen ausgesetzt ist, stellt der Kathodenstromkollektor einer Schmelzcarbonat-Brennstoffzelle (MCFC = Molten Carbonate Fuel Cell) dar.

Schmelzcarbonat-Brennstoffzellen bestehen im wesentlichen aus einer porösen Kathode und einer porösen Anode und einer Matrix, die mit einem Schmelzelektrolyten, nämlich einem Lithium- und andere Alkalicarbonate enthaltenden eutektischen Gemisch, getränkt ist, welcher mit den Elektroden in Kontakt steht. Zur Ableitung des elektrochemisch erzeugten Stromes liegen an der Kathode und der Anode jeweils Stromkollektoren an, die meist gewellt ausgebildet sind, um zugleich einen Gaszufuhrraum zu bilden, und zwar zur Zufuhr von Luft oder einem anderen sauerstoffhaltigen Gas an der Kathode und einem Brenngas an der Anode. Die Brennstoffzelle wird bei einer Temperatur von 500 bis 800°C betrieben. Der Kathodenstromkollektor ist durch Kontakt mit dem sauerstoffhaltigen Gas und der Carbonatschmelze sowie durch die hohe Temperatur starken korrosiven Einflüssen ausgesetzt. Trotz Verwendung von Chromstahl bildet sich damit an der Oberfläche des Kathodenstromkollektors eine Oxidschicht, die zu einem hohen Übergangswiderstand zwischen dem Kathodenstromkollektor und der Kathode und damit zu hohen Leistungsverlusten der Schmelzcarbonat-Brennstoffzelle führe.

Um diesen Übergangswiderstand herabzusetzen, wird nach DE 195 32 791 A1 vorgeschlagen, auf den Kathodenstromkollektor an den Kontaktstellen mit der Kathode ein Edelmetall, wie Gold oder Platin, aufzutragen. Abgesehen von den hohen Kosten der Edelmetalle hat dieses Verfahren den Nachteil, dass noch eine Diffusionsbarriere zwischen der dünnen Edelmetallschicht und dem Chromstahl-Kathodenstromkollektor aufgebracht werden muß, um ein Eindiffundieren des Edelmetalls in den Chromstahl zu verhindern. Es sind also mehrere Beschichtungsschritte notwendig.

Aufgabe der Erfindung ist es, ein Verfahren anzugeben, mit dem der elektrische Widerstand am Übergang zu einem stromführenden Chromstahl-Bauteil durch eine korrosionsbedingte Oberflächenoxidschicht an dem Bauteil auf einfache Weise herabgesetzt werden kann.

Dies wird erfindungsgemäß mit dem im Anspruch 1 angegebenen Verfahren erreicht. In den Ansprüche 2 bis 9 sind vorteilhafte Ausgestaltungen der Erfindung wiedergegeben.

Nach dem erfindungsgemäßen Verfahren wird das betreffende Chromstahl-Bauteil geglüht. Das Glühen muß dabei entweder unter absolutem Sauerstoffausschluß erfolgen, oder eine beim Glühen entstehende Oxidschicht muß zumindest an den stromführenden Übergangsstellen restlos entfernt werden, bevor das Bauteil eingebaut wird.

Zwar entsteht an dem erfindungsgemäß behandelten stromführenden Chromstahl-Bauteil bei seinem Einsatz in einer oxidierenden Atmosphäre, insbesondere bei hohen Temperaturen, zwangsläufig wiederum eine Oberflächenoxidschicht. Erstaunlicherweise besitzt diese Oxidschicht jedoch einen wesentlich reduzierten elektrischen Widerstand, und zwar wird der Übergangswiderstand gegenüber einem Chromstahl-Bauteil gleicher Zusammensetzung, das jedoch nicht nach dem erfindungsgemäßen Verfahren geglüht worden ist, um etwa das Zehnfache herabgesetzt.

Erstaunlich ist ferner, dass trotz der Herabsetzung des elektrischen Übergangswiderstandes die auf dem Bauteil bei seinem Einsatz in oxidierender Atmosphäre gebildete Oxidschicht dem Korrosionsangriff in gleicher Weise widersteht wie ein Chromstahl-Bauteil der gleichen Zusammensetzung, das jedoch nicht erfindungsgemäß in sauerstofffreier Atmosphäre geglüht worden ist.

Das bei dem erfindungsgemäßen Verfahren auftretende Phänomen, dass die bei Einsatz des Bauteils in oxidierender Atmosphäre gebildete Oberflächenoxidschicht einerseits eine hohe Korrosionsfestigkeit, andererseits aber einen niedrigen elektrischen Widerstand besitzt, läßt sich nicht erklären. Zwar verändert sich beim Glühen die Kornstruktur des Chromstahls, so dass denkbar ist, dass aus dem Stahl weniger Chrom an die Oberfläche diffundiert und damit die Chromoxidbildung an der Oberfläche zurückgedrängt wird. Andererseits wird aber gerade eine chromoxidhaltige Oxidschicht an der Oberfläche als Voraussetzung für die antikorrosiven Eigenschaften eines Chromstahls angesehen.

Mit anderen Worten, es wurde festgestellt, dass im Vergleich zu auf unbehandeltem Chromstahl entstehenden Oxidschichten der elektrische Widerstand nach dem erfindungsgemäßen Verfahren überraschenderweise um etwa eine Größenordnung abgesenkt wird. Detaillierte Untersuchungen mittels physikalischer Methoden ergaben einen deutlichen Unterschied in der Zusammensetzung und der Struktur der entstandenen Oxidschichten gegenüber unbehandeltem Chromstahl der gleichen Zusammensetzung. Der Chromgehalt ist bei der auf dem erfindungsgemäß behandelten Stahl aufgewachsenen Oxidschicht über die gesamte Schicht deutlich niedriger als der in einer auf dem gleichen, aber unbehandelten Stahl aufgewachsenen Oxidschicht. Der Chromgehalt des unbehandelten und des erfindungsgemäßen Stahls selbst ist im Volumen zwar gleich, so dass also nicht einfach eine Absenkung des Chromgehalts die Ursache für die Kombination von guter Korrosionsbeständigkeit und niedrigem elektrischem Widerstand ist. Wird nämlich einfach der Chromgehalt des Stahls abgesenkt, so erhält man zwar auch eine Absenkung des elektrischen Widerstandes, aber gleichzeitig eine deutliche Verschlechterung der Korrosionsbeständigkeit. Falls der behandelte Chromstahl ein Stahl mit der Werkstoffnummer 1.4404 (AISI 316 L) ist, weist der nach dem erfindungsgemäßen Verfahren behandelte Stahl im Vergleich zu unbehandeltem Stahl ein grobes Gefüge und eine Absenkung des Chrom- und Mangangehaltes an der Oberfläche auf.

Vorzugsweise wird erfindungsgemäß ein Chromstahl mit einem Chromgehalt von 10 bis 22 Gew.-%, insbesondere 15 bis 19 Gew.-%, und ganz besonders bevorzugt von weniger als 17 Gew.-% verwendet.

Die übrigen Bestandteile des Edelstahls können in Gewichtsprozent sein:
0 bis 2% Kohlenstoff, Silicium, Phosphor und/oder Schwefel
0 bis 20% Mangan
0 bis 10% Molybdän
0 bis 20% Nickel
0 bis 15% Cobalt
weniger als 0,5% Aluminium, Yttrium, Titan und/oder Cer.

Insbesondere sollte der Gehalt an Aluminium, Yttrium, Titan und/oder Cer weniger als 0,05% betragen. Diese Elemente bilden nämlich an der Oberfläche des Bauteils Oxide mit einem sehr hohen elektrischen Widerstand.

Insbesondere hat sich Stahl der Werkstoffnummer 1.4404 für das erfindungsgemäße Verfahren als geeignet erwiesen. Dieser Stahl weist folgende Zusammensetzung in Gewichtsprozent auf:
C ≤ 0,030
Si ≤ 1,00
Mn ≤ 2,00
P ≤ 0,045
S ≤ 0,030
Cr 16,5-18,5
Mo 2,00-2,50
Ni 11,0-14,0

Rest Eisen und herstellungsbedingte Verunreinigungen oder
C ≤ 0,03
Si ≤ 1,50
Mn ≤ 1,50
P ≤ 0,035
S ≤ 0,020
Cr 17,0-20,0
Mo 2,00-3,00
Ni 9,00-13,0

Rest Eisen und herstellungsbedingte Verunreinigungen.

Die Glühbehandlung des Chromstahl-Bauteils wird bei dem erfindungsgemäßen Verfahren bei einer Temperatur von mindestens 950°C durchgeführt, vorzugsweise in einem Temperaturbereich zwischen 1050 und 1400°C, wobei mindestens eine Stunde geglüht wird.

Um zu verhindern, dass beim Glühvorgang eine dicke Oxidschicht entsteht, muß der Glühvorgang im Vakuum oder in einer sauerstofffreien Atmosphäre, beispielsweise reinem Wasserstoff, durchgeführt werden. Es genügt nicht unter einem üblichen Schutzgas, also z.B. Edelgas, Stickstoff oder Formiergas zu glühen, da der, wenn auch nur in extrem geringen Mengen vorhandene Sauerstoff bei der Glühtemperatur in jedem Fall zu einer Ausbildung der Oxidschicht führt, die nicht die gewünschten Eigenschaften aufweist.

Auch ist es möglich, in anderen Atmosphären oder sogar Luft zu glühen, wenn nach dieser Glühbehandlung die entstandene Oxidschicht zumindest an den stromführenden Übergangsstellen des Bauteils nach der Glühbehandlung wieder sorgfältig entfernt wird.

Werden die so behandelten Chromstahl-Bauteile in einem Temperaturbereich von 500 bis 800°C in oxidierender Atmosphäre eingesetzt, so entsteht eine Oxidschicht, die sich aus mehreren Phasen zusammensetzt. Hierbei handelt es sich um eine Mischung aus verschiedensten Eisen-, Nickel-Chromoxiden sowie Spinellen.

Da, wie eingangs erwähnt, insbesondere die Kathodenstromkollektoren von Schmelzcarbonat-Brennstoffzellen einem starken Korrosionsangriff ausgesetzt sind, andererseits an den Kontaktstellen zu der Kathode aber einen geringen elektrischen Übergangswiderstand aufweisen müssen, wird das Verfahren zur Herstellung von Kathodenstromkollektoren aus Chromstahl für Schmelzcarbonat-Brennstoffzellen verwendet.

## Patentansprüche

1. Verwendung eines Chromstahl-Bauteils als Kathodenstromkollektor für eine Schmelzkarbonatbrennstoffzelle, wobei das Chromstahl-Bauteil zur Herabsetzung des durch eine in der oxidierenden Atmosphäre der Brennstoffzelle aufwachsenden Korrosionsoxidschicht bedingten elektrischen Widerstands am stromführenden Übergang zum Chromstahl-Bauteil vor dem Einsatz in der Brennstoffzelle bei mindestens 950°C geglüht wird, und wobei eine beim Glühen ggf. entstehende Oxidschicht vor dem Einsatz des Bauteils als Kathodenstromkollektor entfernt wird.

2. Verwendung nach Anspruch 1, **dadurch gekennzeichnet, dass** ein Chromstahl mit einem Chromgehalt von 10 bis 22 Gew.-% verwendet wird.

3. Verwendung nach Anspruch 2, **dadurch gekennzeichnet, dass** der Chromgehalt des Chromstahls 15 bis 19 Gew.-% beträgt.

4. Verwendung nach einem der vorstehenden Ansprüche, **dadurch gekennzeichnet, dass** der Chromstahl in Gewichtsprozent
0 bis 2% Kohlenstoff, Silicium, Phosphor und/oder Schwefel,
0 bis 20% Mangan,
0 bis 10% Molybdän,
0 bis 20% Nickel,
0 bis 15% Cobalt, und
weniger als 0,5% Aluminium, Yttrium, Titan und/oder Cer
enthält.

5. Verwendung nach einem der vorstehenden Ansprüche, **dadurch gekennzeichnet, dass** ein Chromstahl der Werkstoffnummer 1.4404 verwendet wird.

6. Verwendung nach einem der vorstehenden Ansprüche, **dadurch gekennzeichnet, dass** die Glühbehandlung bei einer Temperatur zwischen 1050 und 1400°C durchgeführt: wird.

7. Verwendung nach einem der vorstehenden Ansprüche, **dadurch gekennzeichnet, dass** die Glühbehandlung wenigstens eine Stunde durchgeführt wird.

8. Verwendung nach einem der vorstehenden Ansprüche, **dadurch gekennzeichnet, dass** zur Verhinderung der Bildung einer Oxidschicht beim Glühen im Vakuum oder in einer sauerstofffreien Atmosphäre geglüht wird.

9. Verwendung nach Anspruch 8, **dadurch gekennzeichnet, dass** als sauerstofffreie Atmosphäre Wasserstoff verwendet wird.

## Claims

1. Use of a chrome steel component as a cathode current collector for a molten carbonate fuel cell, where to reduce the electrical resistance at the current-carrying bridge to the chrome steel component that is resulting from an oxide corrosion layer which grows in the oxidizing atmosphere of the fuel cell the chrome steel component is calcined at at least 950°C before being used in the fuel cell, and where any oxide layer formed during calcining is removed before the component is used as a cathode current collector.

2. Use according to Claim 1, **characterized in that** a chrome steel with a chromium content of from 10 to 22% is used.

3. Use according to Claim 2, **characterized in that** the chromium content of the chrome is from 15 to 19% by weight.

4. Use according to one of the preceding claims, **characterized in that** the chrome steel comprises, in weight percentages:
from 0 to 2% carbon, silicon, phosphorus and/or sulphur,
from 0 to 20% manganese,
from 0 to 10% molybdenum,
from 0 to 20% nickel,
from 0 to 15% cobalt, and
less than 0.5% aluminium, yttrium, titanium and/or cerium.

5. Use according to one of the preceding claims, **characterized in that** a chrome steel of material number 1.4404 is used.

6. Use according to one of the preceding claims, **characterized in that** the calcining treatment is conducted at a temperature between 1050 and 1400°C.

7. Use according to one of the preceding claims, **characterized in that** the calcining treatment is conducted for at least one hour.

8. Use according to one of the preceding claims, **characterized in that** to prevent the formation of an oxide layer during calcining, calcining is conducted in a vacuum or in an oxygen-free atmosphere.

9. Use according to Claim 8, **characterized in that** hydrogen is used as oxygen-free atmosphere.

## Revendications

1. Utilisation d'une pièce de construction en acier au chrome en tant que collecteur de courant cathodique pour une cellule électrochimique au carbonate fondu, la pièce de construction en acier au chrome étant soumise à calcination à au moins 950°C, au niveau du passage conducteur de courant vers la pièce de construction en acier au chrome, avant l'utilisation dans la cellule électrochimique, en vue de la réduction de la résistance électrique conditionnée par une couche d'oxydes de corrosion croissant dans l'atmosphère oxydante de la cellule électrochimique, et une couche d'oxydes se formant éventuellement lors de la calcination étant éliminée avant l'utilisation de la pièce de construction en tant que collecteur de courant cathodique.

2. Utilisation selon la revendication 1, **caractérisée en ce que** l'on utilise un acier au chrome ayant une teneur en chrome de 10 à 22% en poids.

3. Utilisation selon la revendication 2, **caractérisée en ce que** la teneur en chrome de l'acier au chrome est de 15 à 19% en poids.

4. Utilisation selon l'une quelconque des revendications précédentes, **caractérisée en ce que** l'acier au chrome contient, en pourcentages pondéraux,
de 0 à 2% de carbone, de silicium, de phosphore et/ou de soufre,
de 0 à 20% de manganèse,
de 0 à 10% de molybdène,
de 0 à 20% de nickel,
de 0 à 15% de cobalt, et
moins de 0,5% d'aluminium, d'yttrium, de titane et/ou de cérium.

5. Utilisation selon l'une quelconque des revendications précédentes, **caractérisée en ce que** l'on utilise un acier au chrome du numéro de matériau 1.4404.

6. Utilisation selon l'une quelconque des revendications précédentes, **caractérisée en ce que** l'on effectue le traitement de calcination à une température comprise entre 1050 et 1400°C.

7. Utilisation selon l'une quelconque des revendications précédentes, **caractérisée en ce que** le traitement de calcination est effectué pendant au moins une heure.

8. Utilisation selon l'une quelconque des revendications précédentes, **caractérisée en ce que** l'on procède à la calcination, sous vide ou sous une atmosphère exempte d'oxygène, en vue d'empêcher la formation d'une couche d'oxydes lors de la calcination.

9. Utilisation selon la revendication 8, **caractérisée en ce que** l'on utilise l'hydrogène en tant qu'atmosphère exempte d'oxygène.
